# EUROPÄISCHE PATENTSCHRIFT

(11) **EP 1 399 601 B1**
(45) Veröffentlichungstag und Bekanntmachung des Hinweises auf die Patenterteilung: **13.10.2004**
(21) Anmeldenummer: 02747387.5
(22) Anmeldetag: 14.06.2002
(51) Int. Cl.: C23C 2/00, F16C 33/04

(54) **BESCHICHTUNGSVORRICHTUNG**
COATING DEVICE
DISPOSITIF DE REVETEMENT

(30) Priorität: 27.06.2001 DE 10130959
(43) Veröffentlichungstag der Anmeldung: 24.03.2004
(73) Patentinhaber: Band-Zink GmbH, 40764 Langenfeld (DE)
(72) Erfinder: PLÄTZER, Daniel, 47809 Krefeld (DE); PLÄTZER, Wilfried, 47809 Krefeld (DE); SCHMIDT, Ernst-Werner, 40764 Langenfeld (DE); LIEUTENANT, Roman, 47877 Willich (DE)
(74) Vertreter: Selting, Günther, Dipl.-Ing.
(86) Internationale Anmeldenummer: PCT/EP2002/006540
(87) Internationale Veröffentlichungsnummer: WO 2003/002778

(56) Entgegenhaltungen:
- WO-A-91/03581
- US-A- 5 571 328
- US-A- 5 667 310
- US-A- 5 711 613

## Beschreibung

Die Erfindung bezieht sich auf eine Beschichtungsvorrichtung zum Beschichten eines Metallbandes in einer Schmelze eines Metalles.

Beschichtungsvorrichtungen werden zur Beschichtung von Metallbändern und -blechen mit Zink, Aluminium, Zinn, Blei, Galvalum oder Galfan eingesetzt. Das Metallband bzw. -blech wird dabei durch eine mehrere Hundert Grad Celsius heiße Metallschmelze des Beschichtungsmetalls hindurchgezogen: Das Metallband taucht fortlaufend nach unten in die Metallschmelze ein, wird durch eine rotierende Welle in der Metallschmelze nach oben umgelenkt, durch eine Stabilisierungswelle beruhigt und läuft nach oben wieder aus der Metallschmelze heraus. Die Lagerung der Umlenkwelle und/ oder der Stabilisierungswelle in der Schmelze erfolgt in offenen Gleitlagern, die als Verschleißlager ausgelegt sind. Die Gleitlager werden jeweils von einem Lagergehäuse und einer darin gehaltenen nicht-geschlossenen einstückigen Lagerschale mit einem einzigen Lagerflächen-Paar gebildet. Bei hohen radialen Belastungen der Umlenk- bzw. Stabilisierungswelle werden die beiden Lagerflächen durch den Wellenzapfen auseinandergespreizt. Bei starken Radialkräften können zwischen den beiden steif miteinander verbundenen Lagerflächen so hohe Biegekräfte auftreten, dass die Lagerschale in diesem Bereich bricht. Nach einem Bruch der Lagerschale muss diese ausgewechselt werden. Das Auswechseln der Lagerschale beansprucht mehrere Stunden, was bei Beschichtungsanlagen mit einem Wert von bis zu 200 Millionen DM einen erheblichen Schaden darstellt.

Aufgabe der Erfindung ist es daher, einen Bruch der Lagerschale auch bei hohen Radialbelastungen zu vermeiden.

Bei der erfindungsgemäßen Beschichtungsvorrichtung weist die Lagerschale zwischen den beiden Lagerflächen eine Verformungszone mit einem Verformungselement auf. Die beiden benachbarten Lagerflächen der Lagerschale sind also nicht mehr steif und damit bruchanfällig miteinander verbunden, sondern sind durch ein Verformungselement miteinander verbunden, das derart ausgestaltet ist, dass es Verbiegungen unter Beibehaltung der Verbindung der beiden Lagerflächen bzw. Lagerschalenteile zulässt. Hierdurch wird ein unerwünschter Bruch der Lagerschale vermieden. Der kostspielige Austausch zerbrochener Lagerschalen entfällt.

Vorzugsweise wird die Verformungszone durch einen durchgehenden Radialspalt in der Lagerschale gebildet, der durch das Verformungselement ausgefüllt ist, das aus einem anderen Material als dem der beiden Lagerschalenteile besteht. Der Radialspalt teilt die Lagerschale in zwei separate Teile, die nur durch das Verformungselement miteinander verbunden sind. Das Verformungselement ist in Form eines Streifens ausgebildet, der den Radialspalt vollständig ausfüllt.

Die Verformungszone kann jedoch auch auf andere Weise ausgebildet sein, beispielsweise als Drehgelenk oder in Form eines Filmgelenkes mit einer filmartigen dünnen Verbindungsbrücke zwischen den beiden Lagerflächen bzw. Lagerschalenteilen.

Gemäß einer bevorzugten Ausgestaltung ist die Lagerschale aus Keramik. Vorzugsweise ist das Verformungselement eine Graphitfolie, die in dem Radialspalt zwischen den beiden Lagerschalenteilen angeordnet ist und diese miteinander verbindet. Wie Versuche ergeben haben, weist die Graphitfolie eine ausreichende Flexibilität für bei hohen Radialkräften auftretende Bewegungen zwischen den beiden Lagerschalenteilen auf. Die Graphitfolie ist gleichzeitig ausreichend resistent gegen die ggf. sehr aggressive Metallschmelze.

Gemäß einer bevorzugten Ausgestaltung ist die Spaltweite kleiner als 2,0 mm, insbesondere zwischen 0,3 mm und 1,0 mm. Wie Versuche ergeben haben, ist insbesondere eine Graphitfolie mit einer Stärke von 0,5 - 0,8 mm gut geeignet als Verformungselement in einem Radialspalt gleicher Weite.

Gemäß einer bevorzugten Ausgestaltung ist die Welle eine Stabilisierungswelle zur Stabilisierung des Metallbandes gegen Flattern.

Im Folgenden wird unter Bezugnahme auf die Zeichnungen ein Ausführungsbeispiel der Erfindung näher erläutert.

Es zeigen:
- Fig. 1: eine erfindungsgemäße Beschichtungsvorrichtung mit einer Umlenkwelle und einer Stabilisierungswelle in einer Metallschmelze in Seitenansicht,
- Fig. 2: die Beschichtungsvorrichtung der Fig. 1 in Vorderansicht,
- Fig. 3: einen Längsschnitt eines Gleitlagers der Beschichtungsvorrichtung der Fig. 1 und
- Fig. 4: einen Querschnitt eines Gleitlagers der Beschichtungsvorrichtung der Fig. 1.

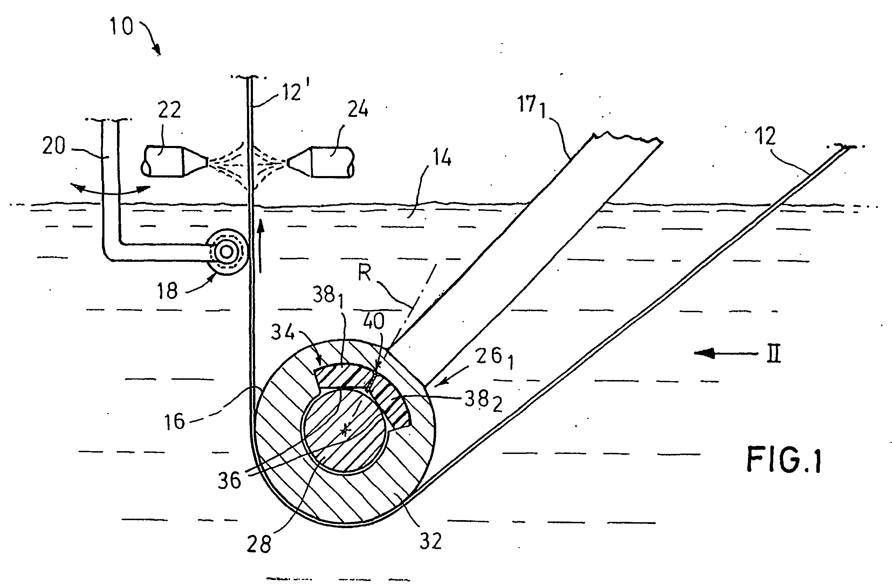

In Fig. 1 ist in Seitenansicht eine Beschichtungsvorrichtung 10 vereinfacht dargestellt, mit der Umlenkwelle im Teilschnitt. Ein Metallband 12 wird durch eine Metallschmelze 14 geleitet, um die Oberfläche des Metallbandes 12 mit einer dünnen Metallbeschichtung zu versehen. Die Metallschmelze kann aus flüssigem Zink, Blei, Zinn, Aluminium, Galvalum, Galfan oder anderen zur Metallbeschichtung geeigneten Metallen bestehen. Die Metallschmelze 14 hat, je nach Art des geschmolzenen Metalles, eine Temperatur von 400 - 1000 °C.

Das Metallband 12 wird unter einem Winkel von 30 - 45 ° zur Horizontalen in die Metallschmelze 14 eingeführt und in der Schmelze 14 durch eine drehbare Umlenkwelle 16 nach oben umgelenkt, so dass das Metallband 12' senkrecht nach oben aus der Metallschmelze 14 wieder herausgeführt wird. Der Umschlingungswinkel des Metallbandes 12, 12' um die Umlenkwelle 16 beträgt ungefähr 130 °. Die Zugkraft des Metallbandes 12 beträgt zwischen 1,0 - 8, 5 Tonnen.

Zur Stabilisierung des Metallbandes 12, 12' liegt an dem senkrecht aus der Metallschmelze 14 herauslaufendem Metallband 12' eine Stabilisierungswelle 18 an, um das horizontale Flattern des Metallbandes 12' zu dämpfen und zu reduzieren. Die Stabilisierungswelle 18 ist an einem beweglichen Führungsarm 20 aufgehängt, der schwenkbar gelagert und in horizontaler Richtung auf das Metallband 12' vorgespannt ist. Ferner ist der Stabilisierungswellen-Führungsarm 20 durch ein entsprechendes Dämpfungselement in seiner horizontalen Bewegung gedämpft. Sowohl die Umlenkwelle 16 als auch die Stabilisierungswelle 18 sind ständig im Betrieb in die Metallschmelze 14 eingetaucht.

Zu beiden Seiten des aus der Metallschmelze 14 heraustretenden senkrecht verlaufenden Metallbandes 12' sind Gasdüsen 22, 24 angeordnet, durch die ein Gasstrom auf beide Seiten des Metallbandes 12' aufgebracht wird. Durch den Gasstrom wird die flüssige Metallschicht auf dem Metallband 12' auf eine bestimmte gleichbleibende Schichtdicke reduziert.

Die Umlenkwelle 16 wird durch zwei Schwenkarme 17₁, 17₂ in der Metallschmelze 14 gehalten. Die Umlenkwelle 16 ist zu Wartungs- und Reparaturzwecken aus der Metallschmelze 14 heraushebbar. Auch der Führungsarm 20 mit der Stabilisierungswelle 18 ist zu diesem Zweck aus der Metallschmelze 14 heraushebbar. Die Arme 17₁, 17₂, 20 werden mittels einer nicht dargestellten Wechseltraverse, an der sie befestigt sind, aus der Metallschmelze 14 herausgehoben.

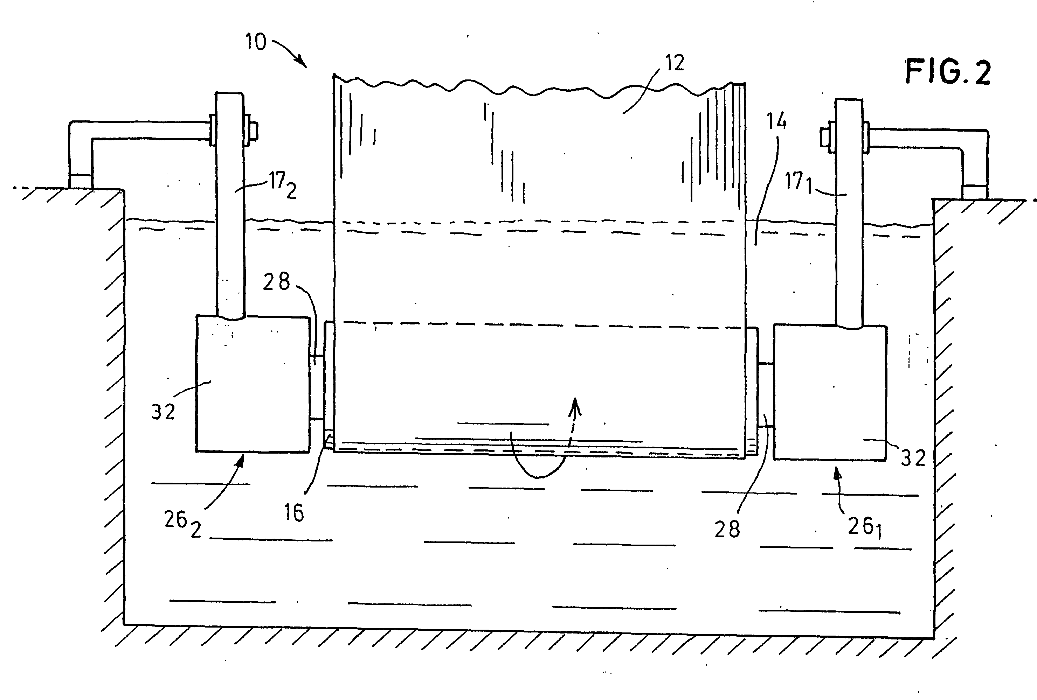

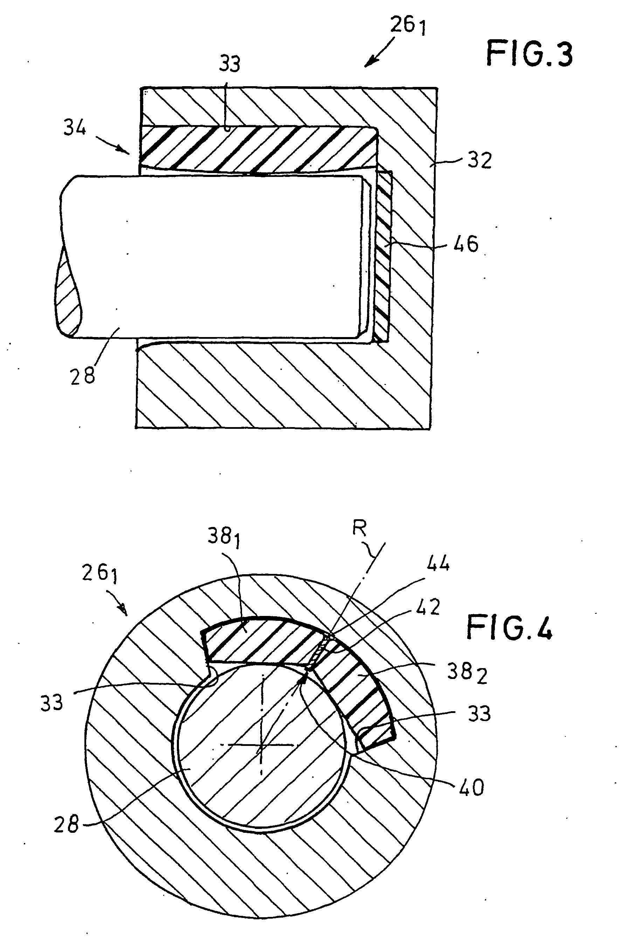

Wie in den Fig. 1 - 4 erkennbar ist, sind an den beiden eingetauchten Enden der Schwenkarme 17₁, 17₂ jeweils Gleitlager 26₁, 26₂ vorgesehen, in denen die Umlenkwelle 16 drehbar gelagert ist. Bei den beiden Gleitlagern 26₁, 26₂ handelt es sich um Verschleißlager, die im Wesentlichen von einem Lagergehäuse 32 und einer axial darin eingesteckten nicht geschlossenen Lagerschale 34 gebildet werden. Jede Lagerschale 34 bildet zwei Lagerflächen 36, die in einem Winkel von ungefähr 130° zueinander geneigt sind. Die Lagerflächen 136 sind im Längsschnitt leicht konvex zur Lagermitte hin gewölbt, wie in Fig. 3 erkennbar, und sind im Querschnitt gerade ausgebildet, wie in Fig. 4 erkennbar ist. Der Wellenzapfen 28 und die Lagerflächen 36 berühren sich bei einer unverschlissenen Lagerschale 34 praktisch nur auf einer punktförmigen Berührungsfläche.

Die Lagerschale 34 besteht aus zwei Lagerschalenhälften 38₁, 38₂, zwischen denen eine Verformungszone 40 vorgesehen ist. Die Verformungszone 40 wird von einem radial und axial durchgehenden Radialspalt 42 gebildet, der als Verformungselement 44 eine Graphitfolie aufweist. Die Spaltweite des Radialspalts 42 und damit die Stärke der Graphitfolie beträgt ungefähr 0,5 mm.

Die Lagerschale 34 ist in eine entsprechende segmentartige Ausnehmung 33 des Lagergehäuses 32 eingesteckt. Die beiden Lagerschalenhälften 38₁, 38₂ bestehen aus Zirkonoxid, können jedoch auch aus einem anderen Keramikmaterial bestehen, wie beispielsweise Siliziumnitrid oder Siliziumcarbid.

Im Bereich des geschlossenen Bodens des Lagergehäuses ist jeweils eine axiale Anschlagplatte 46 aus Keramik eingelassen.

Wie sich insbesondere aus Fig. 1 ergibt, wirkt die sich aus den beiden unter Spannung stehenden Metallbandschenkeln ergebende Kraft-Resultierende R der auf die beiden Gleitlager 26₁, 26₂ wirkenden Radialkräfte ungefähr in Richtung der Winkelhalbierenden der beiden Schenkel des Metallbandes 12, 12'. Die beiden Lagerflächen 36 sind ungefähr gleichwinklig zu beiden Seiten der Radialkraftresultierenden R angeordnet, d. h. die Radialkraftresultierende R liegt ungefähr mittig zwischen den beiden Lagerflächen 36.

Bei starken Zugkräften des Metallbandes 12, 12' werden von der Umlenkwelle 16 bzw. ihren Wellenzapfen 28 hohe Radialkräfte auf die Gleitlager 26₁, 26₂ übertragen. Durch eine gewisse Elastizität, d. h. Nachgiebigkeit des Metall-Lagergehäuses 32 werden im Bereich der Verformungszone 40 Verformungen zugelassen. Durch die Verformungszone 40 in Form der flexiblen Graphitfolie wird ein Auseinanderbrechen und Trennen der Verbindung zwischen den beiden Lagerschalenhälften 38₁, 38₂ zuverlässig vermieden. Hierdurch wird eine Beschädigung bzw. ein Bruch der Lagerschale 34 ausgeschlossen und die Zuverlässigkeit und durchschnittliche Standzeit der Lagerschalen 34 verbessert.

Auch die Stabilisierungswelle 18 ist mit ihren Wellenzapfen in Gleitlagern gelagert, die denen der Umlenkwelle 16 entsprechen.

Durch Vorsehen einer Verformungszone mit einem Verformungselement zwischen den beiden Lagerflächen 36 können beim Auftreten hoher Radialkräfte die beiden Lagerschalenhälften 38₁, 38₂ zueinander gebeugt werden, ohne dass in der Zone zwischen den beiden Lagerschalenhälften 38₁, 38₂ ein Materialbruch und damit eine Zerstörung der Lagerschale auftreten kann.

## Patentansprüche

1. Beschichtungsvorrichtung (10) zum Beschichten eines Metallbandes (12, 12') in einer Metallschmelze (14), mit
einer in der Metallschmelze (14) mit einem Gleitlager (26₁, 26₂) drehbar gelagerten Welle (16) zum Führen des Metallbandes (12, 12'),
wobei das Gleitlager (26₁, 26₂) von einem Lagergehäuse (32) und einer darin gehaltenen offenen Lagerschale (34) mit zwei Lagerflächen (36) gebildet wird,
**dadurch gekennzeichnet,**
**dass** die Lagerschale (34) zwischen den beiden Lagerflächen (36) ein Verformungselement (44) aufweist.

2. Beschichtungsvorrichtung nach Anspruch 1, **dadurch gekennzeichnet, dass** in der Lagerschale (34) ein durchgehender Radialspalt (42) gebildet ist, in dem das Verformungselement (44) angeordnet ist.

3. Beschichtungsvorrichtung nach Anspruch 1 oder 2, **dadurch gekennzeichnet, dass** die Lagerschale (34) aus Keramik besteht.

4. Beschichtungsvorrichtung nach einem der Ansprüche 1 - 3, **dadurch gekennzeichnet, dass** das Verformungselement (44) eine Graphitfolie ist.

5. Beschichtungsvorrichtung nach einem der Ansprüche 2 - 4, **dadurch gekennzeichnet, dass** die Spaltweite des Radialspaltes (42) kleiner als 2,0 mm ist.

6. Beschichtungsvorrichtung nach Anspruch 5, **dadurch gekennzeichnet, dass** die Spaltweite des Radialspalts (42) zwischen 0,3 mm und 1,0 mm liegt.

7. Beschichtungsvorrichtung nach einem der Ansprüche 1 - 6, **dadurch gekennzeichnet, dass** die Welle (18) eine Stabilisierungswelle ist.

## Claims

1. Coating device (10) for coating a metal band (12,12') in a melted metal mass (14), comprising
a shaft (16,18) rotatably supported in the melted metal mass (14) by means of a slide bearing (26₁, 26₂), for guiding the metal band (12,12'),
the slide bearing (26₁, 26₂) being formed by a bearing housing (32) and an open bearing shell (34) held therein, comprising two bearing surfaces (36),
**characterized in**
**that** the bearing shell (34) comprises a deformation element (44) between the two bearing surfaces (36).

2. Coating device according to claim 1, **characterized in that** a continuous radial gap (42) is formed in the bearing shell (34), in which the deformation element (44) is arranged.

3. Coating device according to claim 1 or 2, **characterized in that** the bearing shell (34) consists of ceramics.

4. Coating device according to one of claims 1 - 3, **characterized in that** the deformation element (44) is a graphite sheet.

5. Coating device according to one of claims 2 - 4, **characterized in that** the gap width of the radial gap (42) is smaller than 2.0 mm.

6. Coating device according to claim 5, **characterized in that** the gap width of the radial gap (42) is between 0.3 mm and 1.0 mm.

7. Coating device according to one of claims 1 - 6, **characterized in that** the shaft (18) is a stabilizing shaft.

## Revendications

1. Dispositif de revêtement (10) en vue de revêtir une bande métallique (12, 12') dans un bain de fusion (14),
comprenant un arbre (16), logé de manière rotative dans le bain de fusion (14) avec un palier à glissement (26₁, 26₂) et servant à guider la bande métallique (12, 12'),
le palier à glissement (26₁, 26₂) étant formé d'un logement de palier (32) et d'une coquille de coussinet ouverte (34) maintenue dans celui-ci et comportant deux surfaces portantes (36),
**caractérisé en ce que**
la coquille de coussinet (34) contient, entre les deux surfaces portantes (36), un élément de déformation (44).

2. Dispositif de revêtement selon la revendication 1, **caractérisé en ce que** dans la coquille de coussinet (34) est formée une fente radiale traversante (42), à l'intérieur de laquelle est disposé l'élément de déformation (44).

3. Dispositif de revêtement selon la revendication 1 ou 2, **caractérisé en ce que** la coquille de coussinet (34) est faite de céramique.

4. Dispositif de revêtement selon l'une quelconque des revendications 1 à 3, **caractérisé en ce que** l'élément de déformation (44) est une feuille de graphite.

5. Dispositif de revêtement selon l'une quelconque des revendications 2 à 4, **caractérisé en ce que** la largeur de fente de la fente radiale (42) est inférieure à 2,0 mm.

6. Dispositif de revêtement selon la revendication 5, **caractérisé en ce que** la largeur de fente de la fente radiale (42) se situe entre 0,3 mm et 1,0 mm.

7. Dispositif de revêtement selon l'une des revendications 1 à 6, **caractérisé en ce que** l'arbre (18) est un arbre de stabilisation.
